(19) Europäisches Patentamt
European Patent Office
Office européen des brevets

(11) **EP 2 750 434 B1**

(12) **EUROPEAN PATENT SPECIFICATION**

(45) Date of publication and mention
of the grant of the patent:
**10.04.2019 Bulletin 2019/15**

(51) Int Cl.:
**H04L 5/00** (2006.01)  **H04W 4/06** (2009.01)
**H04W 28/18** (2009.01)  **H04J 11/00** (2006.01)

(21) Application number: **12833992.6**

(22) Date of filing: **21.08.2012**

(86) International application number:
**PCT/CN2012/080404**

(87) International publication number:
**WO 2013/040972 (28.03.2013 Gazette 2013/13)**

(54) **INFORMATION TRANSMISSION METHOD, USER EQUIPMENT AND BASE STATION**

VERFAHREN, BENUTZERGERÄT UND BASISSTATION ZUR INFORMATIONSÜBERTRAGUNG

PROCÉDÉ, ÉQUIPEMENT UTILISATEUR ET STATION DE BASE DE TRANSMISSION D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.09.2011 CN 201110285545**

(43) Date of publication of application:
**02.07.2014 Bulletin 2014/27**

(73) Proprietor: **Huawei Technologies Co., Ltd.
Longgang District
Shenzhen, Guangdong 518129 (CN)**

(72) Inventors:
• **ZHOU, Mingyu
Shenzhen
Guangdong 518129 (CN)**
• **SUN, Weijun
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
WO-A1-2011/015148    WO-A1-2011/015148
WO-A1-2011/098037    CN-A- 102 123 502
CN-A- 102 123 502    CN-A- 102 158 449

• **Leumaleu Djikeussi ET AL: "LTE: Der Mobilfunk der Zukunft Reference Signals and Channel Estimation", , 25 November 2009 (2009-11-25), XP55098478, Retrieved from the Internet: URL:http://www.lmk.lnt.de/fileadmin/Lehre/ Seminar09/Ausarbeitungen/Ausarbeitung_Leu m aleu.pdf [retrieved on 2014-01-27]**

**Description**

**TECHNICAL FIELD**

The present invention relates to the communications field, and in particular, to an information transmission method, a user equipment, and a base station in the communications field.

**BACKGROUND**

In a traditional radio communications system, each cell corresponds only to a transceiver node in one geographic location, and transceiver nodes of different cells are located in different geographic locations and cover different areas. In uplink transmission, a user equipment (User Equipment, "UE" for short) sends a radio signal to a transceiver node of the cell. However, the signal causes interference onto normal receiving performed by transceiver nodes of other cells. For example, a first UE is located in a coverage area of the first cell, and controlled by a first transceiver node. The first UE sends a signal to the first transceiver node, and the signal is also leaked to a second transceiver node and causes interference onto receiving a signal of the second UE by the second transceiver node, where the second UE is located in the coverage area of a second cell and controlled by the second transceiver node.

In uplink signals, a reference signal (Reference Signal, "RS" for short) is used to estimate a channel. That is to say, a UE sends a signal known by a transceiver node, and the transceiver node can estimate a radio channel after receiving the signal, so that a receiver can perform data demodulation or channel sounding conveniently. If the RS receives strong interference, accuracy of the channel estimation is reduced, and transmission efficiency is affected seriously.

Generally, the RS is generated from a sequence, and a same sequence is of the highest correlation. Therefore, if different cells use the same sequence, the mutual interference is the strongest. In the prior art, all available sequences are divided into several groups, and sequences in different groups are scarcely correlated with each other, and therefore, the mutual interference is lower. In this way, if neighboring cells use sequences in different groups, the mutual interference is reduced, which is an interference suppression technology. For example, in a Long Term Evolution Advanced (Long Term Evolution Advanced, "LTE-ADVANCED" for short) system, all available sequences are divided into 30 groups, and the interference can be reduced if neighboring cells use sequences in different groups.

With the development of technologies, people put forward a distributed antenna system (Distributed Antenna System, "DAS" for short), in which one cell includes transceiver nodes in multiple geographic locations. If all UEs use a same sequence group at a same time point for a same cell in the DAS, all UEs covered by different transceiver nodes included in the same cell use the same sequence group, which leads to very strong interference between the UEs covered by different transceiver nodes.

WO 2011015148 A1 discloses a method for configuring a reference signal are provided, the method comprises: acquiring group number information of the reference signal allocated for a user equipment (UE) respectively by each cell; acquiring group offset information of the reference signal of a user equipment (UEm) which is serviced by at least two cells at the same time in the said UE, according to the said group number information; sending the said group offset information to the said UEm, so as to acquiring new group number information according to the group number information and the said group offset information of the said reference signal which is allocated by the said UEm, and sending a reference signal according to the said new group number information. The said method, device and user equipment for configuring the reference signal send a reference signal according to the new group number information to avoid an interference produced for a scheduled UEm by a UE in each cell, while scheduling the UEm.

WO 2011098037 A1 relates to the communication technical field and discloses a method for generating reference signal, which comprises: obtaining first control information, wherein, the first control information indicates or contains the cycle shift related information used by

the terminals which belong to a service cell when the terminals transmit reference signals; transmitting the first control information to the terminals belong to the service cell, therefore the terminals which belong to the service cell generate a reference signal, according to the cycle shift related information used by the terminals when the terminals transmit reference signals, wherein the cycle shift related information is indicated by or contained in the first control information, and the changing cycle shift rules for generating reference signal used by terminals which belong to a service cell and terminals which belong to a coordinated cell are the same. The technical solution enables the User Equipment (UE) reference signals which belong to the service cell received in the coordinated cell and the UE reference signals which belong to the coordinated cell to have good orthogonality, and enables the coordinated cell to demodulate the signals from two cells more precisely, therefore improving the transmission performance of the UE signals.

CN 102123502 A discloses a transmission method of signals for sequence modulation, comprising the following steps: whether user equipment (UE) belongs to a first group of UE or a second group of UE is determined by UE according to first control information sent by a base station or own characteristics of the UE, wherein the sequence set jumping rule corresponding to the first group of UE is different from that corresponding to the second group of UE; sequence jumping parameters are acquired; signals for sequence modulation are generated according to the sequence jumping parameters and the sequence set jumping rules corresponding to the UE groups of the UE; and the signals for sequence modulation are sent to the base station.; As the first group of UE and the second group of UE use different sequence set jumping rules to generate the signals for sequence modulation and send the signals to the base station, the intercell interference can be randomized, and the signal detection performance of the base station is improved.

"LTE: Der Mobilfunk der Zukunft Reference Signals and Channel Estimation" (Leumaleu Djikeussi Et al, 25. November 2009) discloses how the Reference Signals (RS) for Uplink and Downlink case in the LTE are generated in different ways to enable the Channel Estimation. It also presents the different requirements and the key-features of both types of RS. A major problem is always to resolve interference between signals. This work answers how to prevent the reference signals from interference to enable a exact channel estimation. And finally, it is explained how to estimate the channel in frequency domain, where estimation is considered to be applied in frequency, time or spatial direction.

## SUMMARY

Embodiments of the present invention provide an information transmission method, and a communication system comprising a user equipment and a base station, which can reduce the interference between user equipments.

According to one aspect, an embodiment of the present invention provides an information transmission method implemented in a communications system, in which a cell includes transceiver nodes in multiple geographic locations, where the method includes: receiving by a user equipment indication signaling that is sent by a base station and includes a sequence group offset value, where the sequence group offset value is used to adjust a sequence group number of a sequence group used by a user equipment for sending a sequence modulated signal, and wherein the user equipment is controlled by a transceiver node of the transceiver nodes included in the cell; and determining the sequence group number according to the sequence group offset value.

According to another aspect, an embodiment of the present invention provides an information transmission method implemented in a communications system, in which a cell includes transceiver nodes in multiple geographic locations, where the method includes: determining a sequence group offset value, where the sequence group offset value is used to adjust a sequence group number of a sequence group used by a user equipment for sending a sequence modulated signal, and wherein the user equipment is controlled by a transceiver node of the transceiver nodes included in the cell; and sending indication signaling to the user equipment, where the indication signaling includes the sequence group offset value.

According to still another aspect, an embodiment of the present invention provides communications system, in which a cell includes transceiver nodes in multiple geographic locations, comprising a user equipment and a base station (700), wherein the user equipment is controlled by a transceiver node of the transceiver nodes included in the cell, the user equipment comprising a receiving module, configured to receive indication signaling that is sent by a base station and includes a sequence group offset value, where the sequence group offset value is used to adjust a sequence group number of a sequence group used by the user equipment for sending a sequence modulated signal; and a determining module, configured to determine the sequence group number according to the sequence group offset value included in the indication signaling received by the receiving module.

Further, the base station includes: a first determining module, configured to determine a sequence group offset value, where the sequence group offset value is used to adjust a sequence group number of a sequence group used by a user equipment for sending a sequence modulated signal; and a first sending module, configured to send indication signaling to the user equipment, where the indication signaling includes the sequence group offset value determined by the first determining module, wherein the user equipment is controlled by a transceiver node of at least two transceiver nodes included in a cell.

Based on the foregoing technical solutions, in the information transmission method, user equipment, and base station in the embodiments of the present invention, the sequence group number of the sequence group used by the user equipment for sending the sequence modulated signal is adjusted according to the sequence group offset value. Therefore, user equipments controlled by different transceiver nodes use different sequence groups, which can reduce the interference between the user equipments controlled by different transceiver nodes, and randomize the interference, thereby improving transmission efficiency, and reducing system signaling overhead.

## BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1A and FIG. 1B are schematic diagrams of a traditional radio communications system and a DAS system respectively;

FIG. 2 is a schematic flowchart of an information transmission method according to an embodiment of the present invention;

FIG. 3A and FIG. 3B are schematic block diagrams of different sequence groups used by a cell at different time points;

FIG. 4 is another schematic flowchart of an information transmission method according to an example;

FIG. 5 is still another schematic flowchart of an information transmission method according to an example;

FIG. 6 is a schematic flowchart of an information transmission method according to another embodiment of the present invention;

FIG. 7 is another schematic flowchart of an information transmission method according to another example;

FIG. 8 is still another schematic flowchart of an information transmission method according to another example;

FIG. 9 is a schematic block diagram of a user equipment according to an embodiment of the present invention;

FIG. 10 is another schematic block diagram of a user equipment according to an example;

FIG. 11 is still another schematic block diagram of a user equipment according to an example;

FIG. 12 is still another schematic block diagram of a user equipment according to an example;

FIG. 13 is still another schematic block diagram of a user equipment according to an example;

FIG. 14 is a schematic block diagram of a base station according to an embodiment of the present invention;

FIG. 15 is another schematic block diagram of a base station according to an embodiment of the present invention;

FIG. 16 is still another schematic block diagram of a base station according to an embodiment of the present invention;

FIG. 17 is still another schematic block diagram of a base station according to an example;

FIG. 18 is still another schematic block diagram of a base station according to an example; and

FIG. 19 is still another schematic block diagram of a base station according to an example.

## DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

Understandably, the technical solutions of the present invention are applicable to various communications systems, for example, a Global System of Mobile communication (Global System of Mobile communication, "GSM" for short), a Code Division Multiple Access (Code Division Multiple Access, "CDMA" for short) system, a Wideband Code Division Multiple Access (Wideband Code Division Multiple Access, "WCDMA" for short) system, a General Packet Radio Service (General Packet Radio Service, "GPRS" for short) system, a Long Term Evolution (Long Term Evolution, "LTE" for short) system, an LTE Frequency Division Duplex (Frequency Division Duplex, "FDD" for short) system, an LTE Time Division Duplex (Time Division Duplex, "TDD" for short) system, a Universal Mobile Telecommunications System (Universal Mobile Telecommunication System, "UMTS" for short), and so on.

Also understandably, a user equipment (User Equipment, "UE" for short) in the embodiments of the present invention is also known as a terminal (Terminal), a mobile station (Mobile Station, "MS" for short), a mobile terminal (Mobile Terminal), and so on. The user equipment may communicate with one or more core networks through a radio access network (Radio Access Network, "RAN" for short). For example, the user equipment may be a mobile phone (or called a "cellular" phone), or a computer equipped with a mobile terminal. For example, the user equipment may also be a mobile apparatus that is portable, pocket-sized, handheld, built in a computer, or mounted on a vehicle, which exchanges voice and/or data with the radio access network.

In the embodiments of the present invention, a base station may be a base station (Base Transceiver Station, "BTS" for short) in a GSM or CDMA, or a base station (NodeB, "NB" for short) in WCDMA, or an evolved base station (Evolved NodeB, "ENB or e-NodeB" for short) in an LTE system, which is not limited in the present invention. However, for ease of description, the following embodiments will use a base station ENB and a user equipment UE as examples.

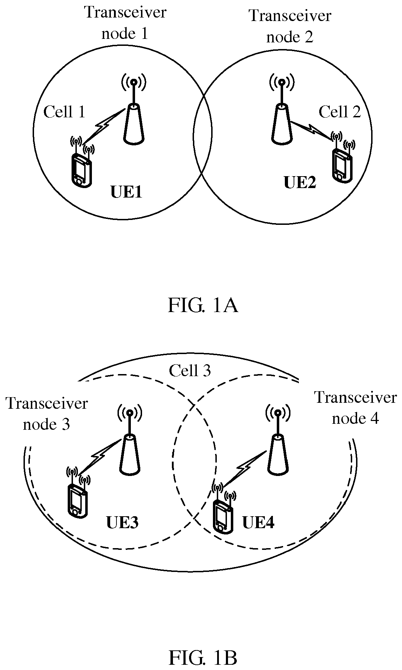

FIG. 1A and FIG. 1B are schematic diagrams of a traditional radio communications system and a DAS system respectively. As shown in FIG. 1A, a traditional radio communications system includes two transceiver nodes, in which a transceiver node 1 corresponds to a cell 1, and a transceiver node 2 corresponds to a cell 2. As shown in FIG. 1B, in a DAS system, a cell 3 includes a transceiver node 3 and a transceiver node 4, and these two transceiver nodes are located in different geographic locations. A scheduler in the cell of the DAS system can control sending and receiving of all UEs in the coverage of multiple transceiver nodes, which facilitates centralized scheduling of the entire cell and improves system efficiency. For example, the controller of the cell 3 can reduce the transmit power of a UE 4 by using signaling, so that signals sent by the UE 4 are prevented from causing strong interference onto receiving signals from a UE 3 by the transceiver node 3. Understandably, the radio communications system and DAS system shown in FIG. 1A and FIG. 1B are merely exemplary, and shall not constitute any limitation to the embodiments of the present invention.

If all UEs use a same sequence group at a same time point for a same cell in the DAS system, all UEs covered by different transceiver nodes use the same sequence group. For example, the UE 3 and the UE 4 use the same sequence group. This leads to very strong interference between the UEs covered by different transceiver nodes. Therefore, the embodiments of the present invention use the following technical solutions to reduce the interference between user equipments.

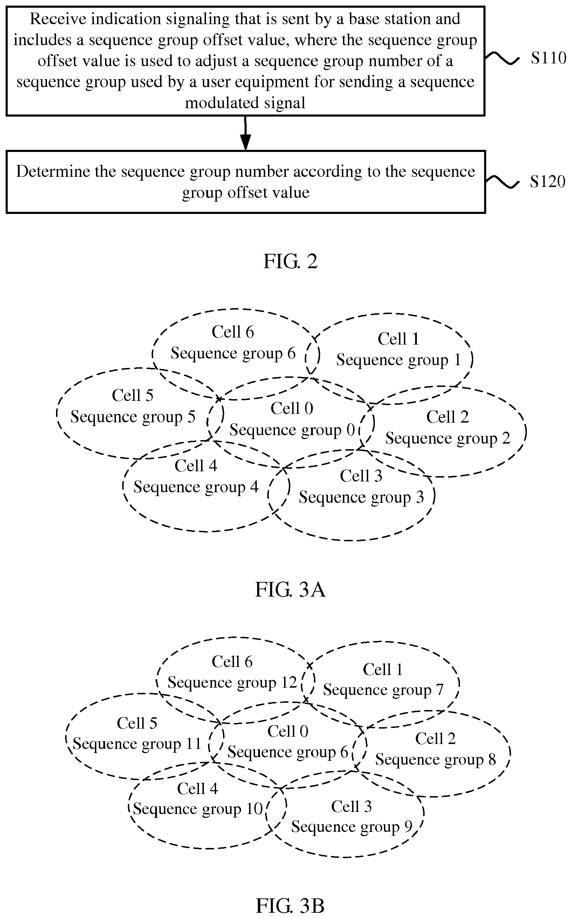

As shown in FIG. 2, an information transmission method according to an embodiment of the present invention includes:

S110. Receive indication signaling that is sent by a base station and includes a sequence group offset value, where the sequence group offset value is used to adjust a sequence group number of a sequence group used by a user equipment for sending a sequence modulated signal.

S120. Determine the sequence group number according to the sequence group offset value.

To reduce the interference between user equipments, the user equipment may receive indication signaling that is sent by a base station and includes a sequence group offset value, where the sequence group offset value is used to adjust a sequence group number of a sequence group used by the user equipment for sending a sequence modulated signal. Therefore, according to the sequence group offset value, the user equipment can determine the sequence group number of the sequence group used for sending the sequence modulated signal, so that user equipments controlled by different transceiver nodes can use different sequence groups, which reduces the interference between the user equipments.

Therefore, in the information transmission method in the embodiment of the present invention, the sequence group number of the sequence group used by the user equipment for sending the sequence modulated signal is adjusted according to the sequence group offset value. Therefore, user equipments controlled by different transceiver nodes use different sequence groups, which can reduce the interference between the user equipments controlled by different transceiver nodes, and randomize the interference, thereby improving transmission efficiency, and reducing system signaling overhead.

Understandably, the embodiment of the present invention uses only a DAS application scenario as an example for description. However, the embodiment of the present invention is not limited thereto. The embodiment of the present invention is also applicable to other communications systems to reduce the interference between user equipments. Also understandably, in the embodiment of the present invention, the sequence group number of the sequence group used by the user equipment for sending the sequence modulated signal is adjusted, which not only can enable user equipments controlled by different transceiver nodes to use different sequence groups, but also can enable user equipments controlled by a same transceiver node to use different sequence groups. This can further reduce the interference between the user equipments in the system and improve transmission efficiency.

In S110, the user equipment receives the indication signaling that is sent by the base station and includes the sequence group offset value. Optionally, the user equipment receives the indication signaling that is sent in a unicast or multicast manner by the base station, where the indication signaling includes the sequence group offset value.

Specifically, as regards the unicast manner, the base station sends signaling to the UE in a unicast manner. That is to say, the base station sends UE-specific (UE-Specific) signaling to the UE. After receiving the signaling, the UE may adjust, according to the signaling, the sequence group used for sending an uplink sequence modulated signal.

The sequence modulated signal refers to a signal generated from a specific sequence, for example, an RS in an LTE-ADVANCED system. Therefore, if the cell sends different signaling to the UEs controlled by different transceiver nodes, after the UEs receive the signaling, the sequence group used by the RS is adjusted by the UEs according to the different signaling, which can enable the UEs controlled by different transceiver nodes to use different sequence groups, thereby reducing the interference between coverage areas of different transceiver nodes.

As regards the multicast manner, the base station sends signaling to the UE in a multicast manner. That is to say, the base station sends the signaling to a group of UEs, where the group of UEs includes at least one UE. After receiving the signaling, the group of UEs may adjust, according to the signaling, the sequence group used for sending the uplink sequence modulated signal. The grouping method of the UEs may be: First, the base station sends to each UE a group ID allocated by the base station to the UE, and after the UE receives the group ID, the UE receives, according to the group ID, the signaling sent by the base station in the multicast manner. An example of the sequence modulated signal is an RS. Therefore, the cell may group the UEs controlled by the same transceiver node into one group, and send different signaling to the UEs in different groups. After the UEs receive the signaling, the sequence group used by the RS is adjusted by the UEs according to the different signaling, which can enable the UEs controlled by different transceiver nodes to use different sequence groups, thereby reducing the interference between the UEs controlled by different transceiver nodes.

In the embodiment of the present invention, as regards that the user equipment receives the indication signaling that is sent by the base station in the multicast manner, optionally, the user equipment receives the indication signaling that is sent by the base station to a user equipment group that includes the user equipment, where user equipments included in the user equipment group are controlled by a same transceiver node. That is to say, the user equipments controlled by different transceiver nodes are divided into different user equipment groups. The user equipments controlled by the same transceiver node may be grouped into one group or multiple groups, which can reduce the interference between the user equipments in different groups in the same transceiver node.

In an example, optionally, the indication signaling received by the user equipment and sent by the base station is radio resource control (Radio Resource Control, "RRC" for short) signaling or media access control (Media Access Control, "MAC" for short) signaling.

Generally, the signaling may include higher layer signaling (Higher-Layer Signaling) and physical layer signaling (Physical Layer Signaling). Higher layer signaling includes RRC signaling and MAC signaling, and higher layer signaling is generally semi-static. That is to say, the UE keeps using old higher layer signaling before receiving new higher layer signaling. The physical layer signaling is generally transmitted over a physical downlink control channel (Physical Downlink Control Channel, "PDCCH" for short). In addition, the physical layer signaling is generally dynamic signaling. That is to say, a single attempt of signaling sending is applicable to only one attempt of data transmission. Therefore, the signaling in the
embodiment of the present invention is higher layer signaling, which can reduce system signaling overhead.

In S120, the user equipment determines the sequence group number according to the sequence group offset value. Optionally, the sequence group offset value is a sequence group number offset value or a cell identifier offset value. The user equipment may determine the sequence group number according to the sequence group number offset value; and the user equipment may also determine the sequence group number according to the cell identifier offset value. The following describes the two scenarios respectively.

In an example, optionally, the user equipment determines the sequence group number $u$ according to the sequence group number offset value $f_{offset}$, where the sequence group number $u$ is determined according to the following equations (1) or (2):

$$u = \left( f_{gh}(n_s) + f_{ss} + f_{offset} \right) \bmod 30$$
$$f_{ss} = \left( f_{ss}^{PUCCH} + \Delta_{ss} \right) \bmod 30 \qquad (1)$$
$$f_{ss}^{PUCCH} = N_{ID}^{cell} \bmod 30$$

$$u = \left( f_{gh}(n_s) + f_{ss} \right) \bmod 30$$
$$f_{ss} = \left( f_{ss}^{PUCCH} + \Delta_{ss} + f_{offset} \right) \bmod 30 \qquad (2)$$
$$f_{ss}^{PUCCH} = N_{ID}^{cell} \bmod 30$$

where $f_{gh}(n_s)$ represents a hopping value of the sequence group in the $n_{sth}$ timeslot, $\Delta_{ss}$ represents a parameter configured by a cell, $\Delta_{ss} \in \{0,1,...,29\}$, $N_{ID}^{cell}$ represents a cell identifier, and mod represents a modulo operation.

That is to say, the sequence group number $u$ of the sequence modulated signal sent by the UE may specifically be $u = (f_{gh}(n_s) + f_{ss} + f_{offset}) \bmod 30$, where $f_{offset}$ represents the sequence group number offset value obtained by the UE according to the received signaling, $f_{ss} = \left( f_{ss}^{PUCCH} + \Delta_{ss} \right) \bmod 30$, and $f_{ss}^{PUCCH} = N_{ID}^{cell} \bmod 30$; or the sequence group number $u$ may specifically be $u = (f_{gh}(n_s) + f_{ss}) \bmod 30$, where $f_{ss} = \left( f_{ss}^{PUCCH} + \Delta_{ss} + f_{offset} \right) \bmod 30$.

Here, $f_{gh}(n_s)$ represents the hopping value of the sequence group in the $n_{sth}$ timeslot, $N_{ID}^{cell}$

represents the cell ID, $\Delta_{ss} \in \{0,1,...,29\}$ is the parameter configured by the cell for sending signaling to the UE, and mod represents the modulo operation.

In an LTE-ADVANCED system, all sequences are divided into 30 groups, and the sequence group number is determined according to $u = (f_{gh}(n_s) + f_{ss})$ mod 30, where $f_{ss}$ represents a sequence group reference value. This value depends on the cell identifier ID and cell configuration. Specifically, $f_{ss} = \left( f_{ss}^{PUCCH} + \Delta_{ss} \right) \bmod 30$, where $f_{ss}^{PUCCH} = N_{ID}^{cell} \bmod 30$, $N_{ID}^{cell}$ represents the cell ID, $\Delta_{ss} \in \{0,1,...,29\}$ is the parameter configured by the cell, and is sent to all UEs of the cell by using broadcast signaling, $f_{gh}(n_s)$ represents the hopping value of the sequence group in the $n_s^{th}$ timeslot (the hopping of the sequence group will be described in the following), and mod represents a modulo operation, such as 3 mod 30 = 3, and 33 mod 30 = 3.

According to an example, the UE may obtain the sequence group number offset value first according to the signaling, and calculate, according to the offset value, the sequence group number used by the RS. For example, the UE determines the sequence group number offset value as $f_{offset}$ according to the signaling, and therefore, the sequence group number of a sequence group used for sending a sequence modulated signal is $u = (f_{gh}(n_s) + f_{ss} + f_{offset})$ mod 30; or, the sequence group number of the sequence group is still $u = (f_{gh}(n_s) + f_{ss})$ mod 30, but $f_{ss} = \left( f_{ss}^{PUCCH} + \Delta_{ss} + f_{offset} \right) \bmod 30$, which can also adjust the sequence group number of the sequence group.

In an example, optionally, the user equipment determines the sequence group number $u$ according to the cell identifier offset value $N_{offset}$, where the sequence group number $u$ is determined according to the following equations (3):

$$
\begin{aligned}
u &= \left( f_{gh}(n_s) + f_{ss} \right) \bmod 30 \\
f_{ss} &= \left( f_{ss}^{PUCCH} + \Delta_{ss} \right) \bmod 30 \\
f_{ss}^{PUCCH} &= N_{ID\_new}^{cell} \bmod 30 \\
N_{ID\_new}^{cell} &= (N_{ID}^{cell} + N_{offset}) \bmod 504
\end{aligned}
\qquad (3)
$$

where $f_{gh}(n_s)$ represents a hopping value of the sequence group in the $n_{sth}$ timeslot, $\Delta_{ss}$ represents a parameter configured by a cell, $\Delta_{ss} \in \{0,1,...,29\}$, $N_{ID}^{cell}$ represents a cell identifier, and mod represents a modulo operation.

A method for calculating the cell ID that is offset is $N_{ID\_new}^{cell} = (N_{ID}^{cell} + N_{offset}) \bmod 504$, where $N_{ID}^{cell}$ represents an actual cell ID, and $N_{offset}$ represents an offset value of the cell ID. For example, the UE calculates the cell ID offset value as $N_{offset}$ according to the signaling, and therefore, the cell ID that has undergone the offset is $N_{ID\_new}^{cell} = (N_{ID}^{cell} + N_{offset}) \bmod 504$, and the value range of the cell ID is 0~503. Then $N_{ID\_new}^{cell}$ is used to calculate $f_{ss}^{PUCCH} = N_{ID\_new}^{cell} \bmod 30$ and calculate $f_{ss} = \left( f_{ss}^{PUCCH} + \Delta_{ss} \right) \bmod 30$, and finally obtain the sequence group number $u = (f_{gh}(n_s) + f_{ss})$ mod 30.

In an example, optionally, according to the cell identifier offset value $N_{offset}$, the user equipment determines an initialized value $c_{init}$ of a random sequence used to generate the hopping value $f_{gh}(n_s)$, where the initialized value $c_{init}$ is determined according to the following equations (4), and $\lfloor \Box \rfloor$ refers to rounding down:

$$c_{init} = \left\lfloor \frac{N_{ID\_new}^{cell}}{30} \right\rfloor \qquad (4)$$

$$N_{ID\_new}^{cell} = (N_{ID}^{cell} + N_{offset}) \bmod 504$$

The following describes specific meanings of a sequence group hopping. In an LTE-ADVANCED system, because the interference between different groups of sequences is different, the phenomenon of interference imbalance occurs. For example, if a cell i uses the $i^{th}$ group of sequences (i = 0~6), the interference between a cell 0 and a cell 1 is different from the interference between a cell 2 and a cell 3, which leads to a great difference between communication experience of the UE in different areas. To keep a basically consistent interference level between different cells, people have introduced an interference randomization technology. For example, a group hopping (Group Hopping) technology is introduced into the LTE-ADVANCED system. That is to say, at different time points, UEs of a same cell use different sequence groups. In the LTE-ADVANCED system, the hopping of a sequence group is reflected by $f_{gh}(n_s)$.

For example, as regards the cell 0 and the cell 1, if no interference randomization technology is used and the interference between the $0^{th}$ group of sequences and the first group of sequences is the strongest, the interference between the cell 0 and the cell 1 keeps strong all along. If the group hopping technology is used, the cell i uses the $i^{th}$ group of sequences (i = 0~6) at the first time point shown in FIG. 3A, that is, $f_{gh}(1)=0$ at this time point; and the cell i uses the $(i+6)^{th}$ group of sequences (6 is a hopping value of the sequence group) at the second time point shown in FIG. 3B, that is, $f_{gh}(2)=6$ at this time point. Therefore, for the cell 0 and the cell 1, at the first time point, the interference between the UEs of the two cells is the interference between the sequence group 0 and the sequence group 1, and the interference is the strongest; and at the second time point, the interference between the UEs of the two cells is the interference between the sequence group 6 and the sequence group 7, and the interference is reduced.

Understandably, the hopping of a sequence group of a specific cell has a different value at a different time point. At a specific time point, hopping values $f_{gh}(n_s)$ of multiple neighboring cells are the same. Because the value of $f_{ss}$ is different, it can be ensured that the sequence groups used by the neighboring cells at any time point are different, thereby preventing the neighboring cells from using the same sequence group at a specific time point due to hopping confusion.

In the LTE-ADVANCED system, $f_{gh}(n_s)$ is generated from a random sequence. The initialized value of the random sequence is $c_{init}1$. Therefore, the value of $f_{gh}(n_s)$ is generally not easy to be controlled. Different cell IDs may correspond to different $f_{gh}(n_s)$ values. In the embodiment of the present invention, if the cell ID is modified to $N_{ID\_new}^{cell} = N_{ID}^{cell} + N_{offset}$, the initialized value of the random sequence changes to $c_{init}2$. In this way, the coverage areas of different transceiver nodes can also benefit from interference randomization. $c_{init}1$ and $c_{init}2$ are determined according to the following equations (5):

$$c_{init}{}^1 = \left\lfloor \frac{N_{ID}^{cell}}{30} \right\rfloor$$

$$c_{init}{}^2 = \left\lfloor \frac{N_{ID\_new}^{cell}}{30} \right\rfloor \qquad (5)$$

Therefore, in the information transmission method in the embodiment of the present invention, the sequence group number of the sequence group used by the user equipment for sending the sequence modulated signal is adjusted according to the sequence group offset value. Therefore, user equipments controlled by different transceiver nodes use different sequence groups, which can reduce the interference between the user equipments controlled by different transceiver nodes, and randomize the interference, thereby improving transmission efficiency, and reducing system signaling overhead.

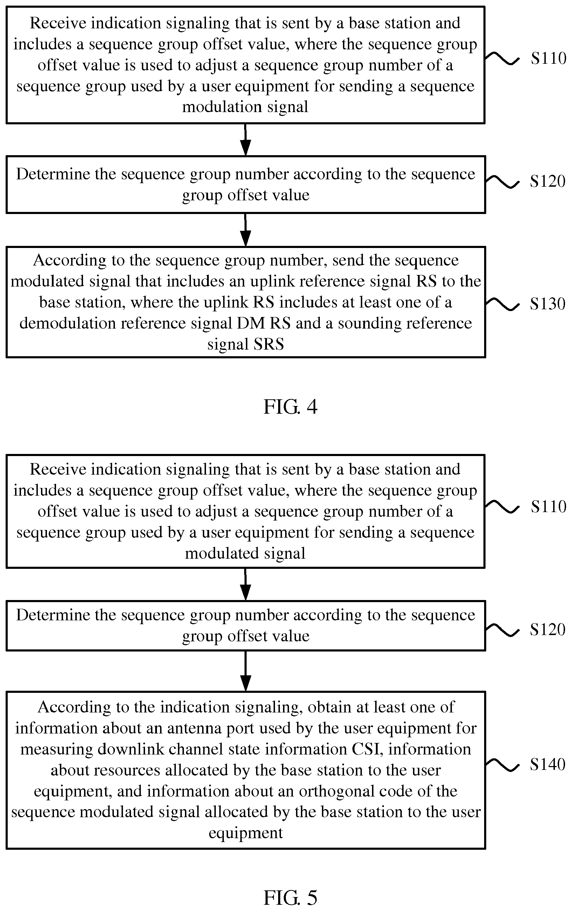

In an example, optionally, as shown in FIG. 4, the information transmission method further includes: S130. According to the sequence group number, the user equipment sends the sequence modulated signal that includes an uplink reference signal RS to the base station, where the uplink RS includes at least one of a demodulation reference signal DM RS and a sounding reference signal SRS.

That is to say, in the example, the sequence modulated signal includes the uplink reference signal RS, and the RS includes the demodulation reference signal (Demodulation Reference Signal, "DM RS" for short) or the sounding reference signal (Sounding Reference Signal, "SRS" for short). For example, in the LTE-ADVANCED system, the uplink RS includes the DM RS used to assist the transceiver node in demodulating useful signals, and the SRS used to detect an uplink channel state. Both of them are sequence modulated signals. The embodiment of the present invention can be used to solve the interference problem of the sequence modulated signals.

Optionally, the DM RS included in the sequence modulated signal is an uplink DM RS of a shared channel.

In the LTE-ADVANCED system, the uplink DM RS may be used to assist the transceiver node in demodulating data or demodulating signaling, and corresponds to a DM RS transmitted over a physical uplink control channel (Physical Uplink Control Channel, "PUCCH" for short) or a physical uplink shared channel (Physical Uplink Shared Channel, "PUSCH" for short). The interference problem existent in the PUCCH can be solved in a way such as resource staggering, and the interference received by the uplink DM RS of the shared channel can be solved by using the present invention.

Optionally, as shown in FIG. 5, the information transmission method further includes:
S140. According to the indication signaling, the user equipment obtains at least one of information about an antenna port used by the user equipment for measuring downlink channel state information CSI, information about resources allocated by the base station to the user equipment, and information about an orthogonal code of the sequence modulated signal allocated by the base station to the user equipment.

That is to say, optionally, the indication signaling is used to indicate not only an adjusted value of the sequence group number, but also the information about the antenna port used by the UE for measuring the downlink CSI.

Specifically, in the LTE-ADVANCED system, the base station generally sends channel state information reference signals (Channel State Information RS, "CSI-RS" for short) of multiple antenna ports to the UE, so that it is easier for the UE to measure a downlink channel state; and each transceiver node corresponds to a part of CSI-RSs. In this way, the base station decides to control the transceiver node of the UE first, and then sends signaling to the UE to to inform the UE of the antenna port for measuring the downlink CSI, where the antenna port corresponds to the transceiver node. In this way, the UE can obtain relevant information corresponding to the transceiver node by measuring only the CSI-RS sent by the base station from the antenna port.

As shown in FIG. 1B, the cell 3 sends the CSI-RS from two antenna ports in total, and transceiver nodes 3 and 4 send a CSI-RS of antenna ports 0 and 1 respectively. For a UE 3, first, the cell 3 decides that the transceiver node 3 communicates with the UE 3, and therefore, sends signaling to the UE 3 to instruct the UE 3 to measure the CSI-RS (corresponding to the transceiver node 3) of the antenna port 0. Therefore, the UE can obtain information corresponding to the transceiver node 3 by measuring the CSI-RS sent by the antenna port 0.

The UE measures the CSI-RS for unlimited purposes. The purpose may be to measure the downlink CSI and feed it back to the base station, which makes it easier for the cell to perform proper scheduling for the UE. For example, the base station needs to obtain, through measurement, downlink CSI according to the CSI-RS sent by the UE 3 from the transceiver node 3 rather than the transceiver node 4, and feed back the downlink CSI to the transceiver node 3, thereby determining a downlink scheduling scheme of the transceiver node 3 for the UE. The purpose may also be to track uplink timing. That is to say, the UE decides the sending time of an uplink signal by measuring a downlink signal sent by the transceiver node. For example, the UE 3 needs to obtain, through measurement, the change of downlink timing according to the CSI-RS sent from the transceiver node 3 rather than the transceiver node 4, thereby determining the sending time of the uplink signal.

By using this solution, the same signaling can indicate two pieces of information: the adjusted value of the sequence group number and the antenna port used by the UE for measuring the downlink CSI, thereby reducing signaling overhead.

That is to say, optionally, the indication signaling is used to indicate not only the adjusted value of the sequence group number, but also resources allocated by the base station to the UE.

For example, in the LTE-ADVANCED system, a minimum granularity of resource allocation is a physical resource block (Physical Resource Block, "PRB" for short). The base station sends signaling to the UE to indicate a PRB allocated to the UE. The signaling may also indicate a modulation value of the sequence group number concurrently. In this way, the signaling overhead can also be reduced.

For example, the UE 3 communicates with the transceiver node 3, and the base station uses the signaling to indicate the following to the UE 3: The resources allocated by the base station to the UE 3 are PRBs 1~3, and therefore, the signaling also indicates that the adjusted value of the sequence group number is 1; and, the UE 4 is controlled by the transceiver node 4, and the base station uses the signaling to indicate the following to the UE 4: The resources allocated by the base station to the UE 4 are PRBs 2~4, and therefore, the signaling also indicates that the adjusted value of the sequence group number is 2. In this way, by using resource allocation signaling, the base station can instruct the UEs controlled by different transceiver nodes to use sequences of different sequence groups.

That is to say, optionally, the indication signaling indicates that the adjusted value of the sequence group number is the minimum number in the resources allocated by the base station to the UE.

For example, the base station uses the signaling to indicate the following to the UE 3: The resources allocated by the base station to the UE 3 are PRBs 1~3, and therefore, the signaling also indicates that the adjusted value of the sequence group number is 1; and the base station uses the signaling to indicate the following to the UE 4: The resources allocated by the base station to the UE 4 are PRBs 2~4, and therefore, the signaling also indicates that the adjusted value of the sequence group number is 2.

Optionally, the indication signaling is used to indicate not only the adjusted value of the sequence group number, but also an orthogonal code of a sequence modulated signal allocated by the base station to the UE.

In the LTE-ADVANCED system, by sending 3-bit signaling to the UE, the base station instructs the UE to send a cyclic shift (Cyclic Shift, "CS" for short) or an orthogonal cover code (Orthogonal Cover Code, "OCC" for short) used by the RS. If the base station allocates a same PRB but different CSs or OCCs to multiple UEs, RSs sent between the multiple UEs are orthogonal to each other, that is, the mutual interference approaches zero. Therefore, the CS or OCC is called an RS orthogonal code.

By using this signaling in this method, the adjusted value of the sequence group number that is indicated by the base station may be implicitly carried in indication signaling of the RS orthogonal code. In this way, the base station can adjust sequence groups of different UEs as different groups by allocating proper orthogonal codes to different UEs. For example, as shown in Table 1, the 3-bit signaling sent by the base station to the UE includes 8 states. The second column indicates CS values corresponding to the 8 states, and the third column indicates adjusted values of the sequence group numbers corresponding to the 8 states.

**Table 1**

| 3-bit signaling | CS value | Adjusted value of sequence group number |
|---|---|---|
| 000 | 0 | -4 |
| 001 | 6 | -3 |
| 010 | 3 | -2 |
| 011 | 4 | -1 |
| 100 | 2 | 0 |
| 101 | 8 | 1 |
| 110 | 10 | 2 |
| 111 | 9 | 3 |

In the information transmission method in the embodiment of the present invention, the sequence group number of the sequence group used by the user equipment for sending the sequence modulated signal is adjusted according to the sequence group offset value. Therefore, user equipments controlled by different transceiver nodes use different sequence groups, which can reduce the interference between the user equipments controlled by different transceiver nodes, and randomize the interference, thereby improving transmission efficiency, and reducing system signaling overhead.

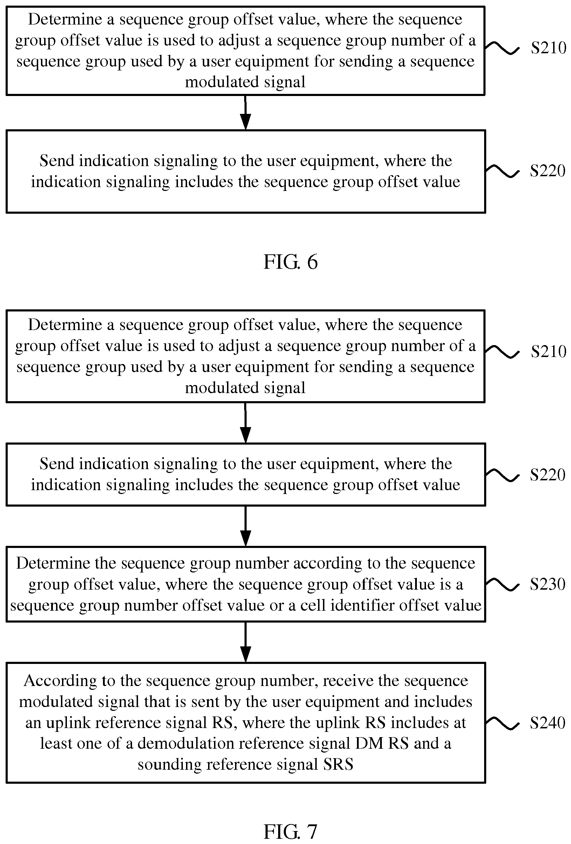

The foregoing has described the information transmission method according to the embodiment of the present invention in detail with reference to FIG. 2 to FIG. 5 from a perspective of a user equipment, and the following describes the information transmission method according to the embodiment of the present invention with reference to FIG. 6 to FIG. 8 from a perspective of a base station.

FIG. 6 shows a schematic flowchart of an information transmission method according to an embodiment of the present invention. As shown in FIG. 6, the method includes:

S210. Determine a sequence group offset value, where the sequence group offset value is used to adjust a sequence group number of a sequence group used by a user equipment for sending a sequence modulated signal.

S220. Send indication signaling to the user equipment, where the indication signaling includes the sequence group offset value.

Therefore, in the information transmission method in the embodiment of the present invention, the sequence group number of the sequence group used by the user equipment for sending the sequence modulated signal is adjusted according to the sequence group offset value. Therefore, user equipments controlled by different transceiver nodes use different sequence groups, which can reduce the interference between the user equipments controlled by different transceiver nodes, and randomize the interference, thereby improving transmission efficiency, and reducing system signaling overhead.

In S210, the base station sends the indication signaling to the user equipment, where the indication signaling includes the sequence group offset value. Optionally, the base station sends the indication signaling to the user equipment in a unicast or multicast manner. Optionally, the base station sends the indication signaling to a user equipment group that includes the user equipment, where user equipments included in the user equipment group are controlled by a same transceiver node. Optionally, the indication signaling is radio resource control RRC signaling or media access control MAC signaling.

In the embodiment of the present invention, as shown in FIG. 7, optionally, the method further includes:
S230. The base station determines the sequence group number according to the sequence group offset value, where the sequence group offset value is a sequence group number offset value or a cell identifier offset value.

In an example, optionally, the base station determines the sequence group number $u$ according to the sequence group number offset value $f_{offset}$, where the sequence group number $u$ is determined according to the following equations:

$$u = \left( f_{\mathrm{gh}}(n_{\mathrm{s}}) + f_{\mathrm{ss}} + f_{offset} \right) \bmod 30$$

$$f_{\mathrm{ss}} = \left( f_{\mathrm{ss}}^{\mathrm{PUCCH}} + \Delta_{\mathrm{ss}} \right) \bmod 30 \qquad ;$$

or

$$f_{\mathrm{ss}}^{\mathrm{PUCCH}} = N_{\mathrm{ID}}^{\mathrm{cell}} \bmod 30$$

$$u = \left( f_{\mathrm{gh}}(n_{\mathrm{s}}) + f_{\mathrm{ss}} \right) \bmod 30$$

$$f_{\mathrm{ss}} = \left( f_{\mathrm{ss}}^{\mathrm{PUCCH}} + \Delta_{\mathrm{ss}} + f_{offset} \right) \bmod 30$$

$$f_{\mathrm{ss}}^{\mathrm{PUCCH}} = N_{\mathrm{ID}}^{\mathrm{cell}} \bmod 30$$

where $f_{\mathrm{gh}}(n_{\mathrm{s}})$ represents a hopping value of the sequence group in the $n_{\mathrm{s}\mathrm{th}}$ timeslot, $\Delta_{\mathrm{ss}}$ represents a parameter configured by a cell, $\Delta_{\mathrm{ss}} \in \{0,1,...,29\}$, $N_{\mathrm{ID}}^{\mathrm{cell}}$ represents a cell identifier, and mod represents a modulo operation.

In the embodiment of the present invention, optionally, the base station determines the sequence group number $u$ according to the cell identifier offset value $N_{offset}$, where the sequence group number $u$ is determined according to the following equations:

$$u = \left( f_{\mathrm{gh}}(n_{\mathrm{s}}) + f_{\mathrm{ss}} \right) \bmod 30$$

$$f_{\mathrm{ss}} = \left( f_{\mathrm{ss}}^{\mathrm{PUCCH}} + \Delta_{\mathrm{ss}} \right) \bmod 30 \qquad ,$$

$$f_{\mathrm{ss}}^{\mathrm{PUCCH}} = N_{\mathrm{ID\_new}}^{\mathrm{cell}} \bmod 30$$

$$N_{\mathrm{ID\_new}}^{\mathrm{cell}} = ( N_{\mathrm{ID}}^{\mathrm{cell}} + N_{offset} ) \bmod 504$$

where $f_{gh}(n_s)$ represents a hopping value of the sequence group in the $n_{sth}$ timeslot, $\Delta_{ss}$ represents a parameter configured by a cell, $\Delta_{ss} \in \{0,1,...,29\}$, $N_{ID}^{cell}$ represents a cell identifier, and mod represents a modulo operation.

In an example, optionally, according to the cell identifier offset value $N_{offset}$, the base station determines an initialized value $c_{init}$ of a random sequence used to generate the hopping value $f_{gh}(n_s)$, where the initialized value $c_{init}$ is determined according to the following equations:

$$c_{init} = \left\lfloor \frac{N_{ID\_new}^{cell}}{30} \right\rfloor$$

$$N_{ID\_new}^{cell} = (N_{ID}^{cell} + N_{offset}) \bmod 504$$

where $\lfloor \Box \rfloor$ refers to rounding down.

As shown in FIG. 7, in an example, optionally, the method further includes:

S240. According to the sequence group number, the base station receives the sequence modulated signal that is sent by the user equipment and includes an uplink reference signal RS, where the uplink RS includes at least one of a demodulation reference signal DM RS and a sounding reference signal SRS. Preferably, the DM RS is an uplink DM RS of a shared channel.

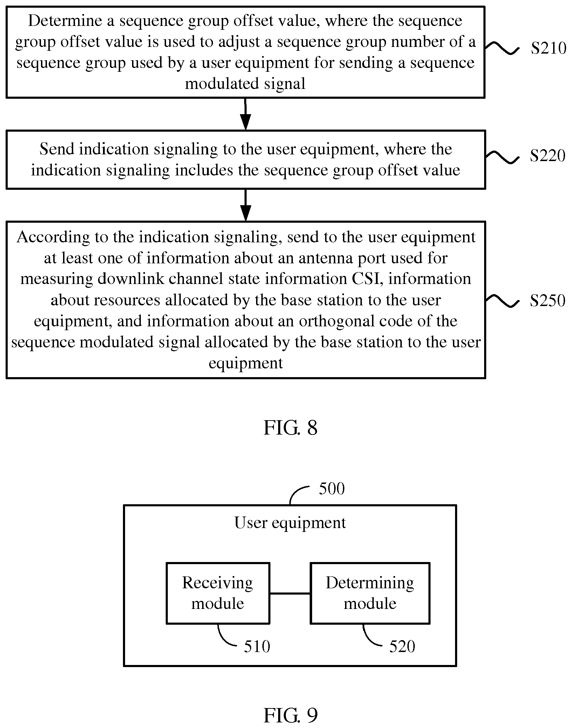

In the example, optionally, as shown in FIG. 8, the method further includes:

S250. According to the indication signaling, the base station sends to the user equipment at least one of information about an antenna port used for measuring downlink channel state information CSI, information about resources allocated by the base station to the user equipment, and information about an orthogonal code of the sequence modulated signal allocated by the base station to the user equipment.

In the information transmission method in the embodiment of the present invention, the sequence group number of the sequence group used by the user equipment for sending the sequence modulated signal is adjusted according to the sequence group offset value. Therefore, user equipments controlled by different transceiver nodes use different sequence groups, which can reduce the interference between the user equipments controlled by different transceiver nodes, and randomize the interference, thereby improving transmission efficiency, and reducing system signaling overhead.

The foregoing has described the information transmission method according to the embodiment of the present invention or example in detail with reference to FIG. 1 to FIG. 8, and the following describes user equipment and a base station according to an embodiment of the present invention in detail with reference to FIG. 9 to FIG. 19.

As shown in FIG. 9, a user equipment 500 according to the embodiment of the present invention includes:

a receiving module 510, configured to receive indication signaling that is sent by a base station and includes a sequence group offset value, where the sequence group offset value is used to adjust a sequence group number of a sequence group used by the user equipment for sending a sequence modulated signal; and
a determining module 520, configured to determine the sequence group number according to the sequence group offset value included in the indication signaling received by the receiving module 510.

Therefore, in the user equipment in the embodiment of the present invention, the sequence group number of the sequence group used by the user equipment for sending the sequence modulated signal is adjusted according to the sequence group offset value. Therefore, user equipments controlled by different transceiver nodes use different sequence groups, which can reduce the interference between the user equipments controlled by different transceiver nodes, and randomize the interference, thereby improving transmission efficiency, and reducing system signaling overhead.

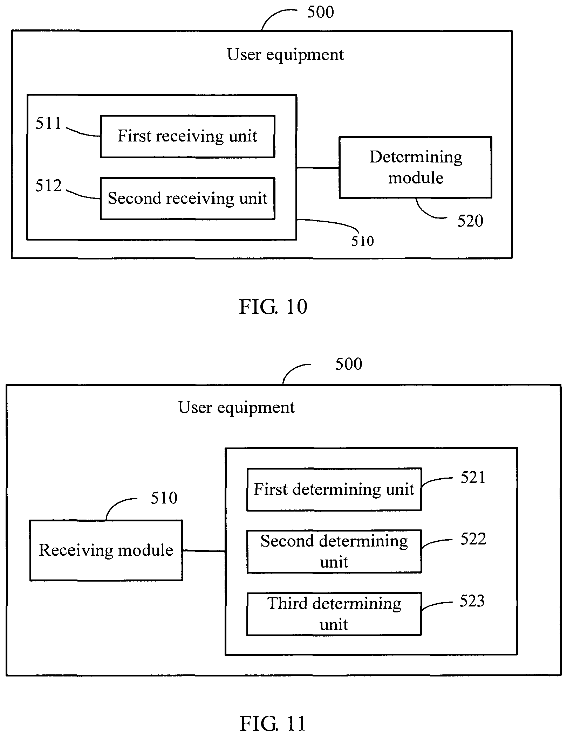

In the embodiment of the present invention, optionally, as shown in FIG. 10, the receiving module 510 includes a first receiving unit 511, and the first receiving unit 511 is configured to receive the indication signaling that is sent in a unicast or multicast manner by the base station, where the indication signaling includes the sequence group offset value.

Optionally, as shown in FIG. 10, the receiving module 510 includes a second receiving unit 512, and the second receiving unit 512 is configured to receive the indication signaling that is sent by the base station to a user equipment group that includes the user equipment, where user equipments included in the user equipment group are controlled by a same transceiver node.

In an example, optionally, the indication signaling received by the receiving module 510 is radio resource control RRC signaling or media access control MAC signaling. Optionally, the sequence group offset value included in the indication signaling received by the receiving module 510 is a sequence group number offset value or a cell identifier offset value.

In an example, optionally, as shown in FIG. 11, the determining module 520 includes a first determining unit 521, and the first determining unit 521 is configured to determine the sequence group number $u$ according to the sequence group number offset value $f_{offset}$ received by the receiving module 510, where the sequence group number $u$ is determined according to the following equations:

$$u = \left( f_{\mathrm{gh}}(n_{\mathrm{s}}) + f_{\mathrm{ss}} + f_{offset} \right) \bmod 30$$

$$f_{\mathrm{ss}} = \left( f_{\mathrm{ss}}^{\mathrm{PUCCH}} + \Delta_{\mathrm{ss}} \right) \bmod 30 \qquad ;$$

or

$$f_{\mathrm{ss}}^{\mathrm{PUCCH}} = N_{\mathrm{ID}}^{\mathrm{cell}} \bmod 30$$

$$u = \left( f_{\mathrm{gh}}(n_{\mathrm{s}}) + f_{\mathrm{ss}} \right) \bmod 30$$

$$f_{\mathrm{ss}} = \left( f_{\mathrm{ss}}^{\mathrm{PUCCH}} + \Delta_{\mathrm{ss}} + f_{offset} \right) \bmod 30$$

$$f_{\mathrm{ss}}^{\mathrm{PUCCH}} = N_{\mathrm{ID}}^{\mathrm{cell}} \bmod 30$$

where $f_{\mathrm{gh}}(n_{\mathrm{s}})$ represents a hopping value of the sequence group in the $n_{\mathrm{sth}}$ timeslot, $\Delta_{\mathrm{ss}}$ represents a parameter configured by a cell, $\Delta_{\mathrm{ss}} \in \{0,1,...,29\}$, $N_{\mathrm{ID}}^{\mathrm{cell}}$ represents a cell identifier, and mod represents a modulo operation.

Optionally, as shown in FIG. 11, the determining module 520 includes a second determining unit 522, and the second determining unit 522 is configured to determine the sequence group number $u$ according to the cell identifier offset value $N_{offset}$ received by the receiving module 510, where the sequence group number $u$ is determined according to the following equations:

$$u = \left( f_{\mathrm{gh}}(n_{\mathrm{s}}) + f_{\mathrm{ss}} \right) \bmod 30$$

$$f_{\mathrm{ss}} = \left( f_{\mathrm{ss}}^{\mathrm{PUCCH}} + \Delta_{\mathrm{ss}} \right) \bmod 30 \qquad ,$$

$$f_{\mathrm{ss}}^{\mathrm{PUCCH}} = N_{\mathrm{ID\_new}}^{\mathrm{cell}} \bmod 30$$

$$N_{\mathrm{ID\_new}}^{\mathrm{cell}} = (N_{\mathrm{ID}}^{\mathrm{cell}} + N_{offset}) \bmod 504$$

where $f_{\mathrm{gh}}(n_{\mathrm{s}})$ represents a hopping value of the sequence group in the $n_{\mathrm{sth}}$ timeslot, $\Delta_{\mathrm{ss}}$ represents a parameter configured by a cell, $\Delta_{\mathrm{ss}} \in \{0,1,...,29\}$, $N_{\mathrm{ID}}^{\mathrm{cell}}$ represents a cell identifier, and mod represents a modulo operation.

Optionally, as shown in FIG. 11, the determining module 520 includes a third determining unit 523, and the third determining unit 523 is configured to: according to the cell identifier offset value $N_{offset}$ received by the receiving module 510, determine an initialized value $c_{init}$ of a random sequence used to generate the hopping value $f_{gh}(n_s)$, where the initialized value $c_{init}$ is determined according to the following equations:

$$c_{init} = \left\lfloor \frac{N_{ID\_new}^{cell}}{30} \right\rfloor ,$$

$$N_{ID\_new}^{cell} = (N_{ID}^{cell} + N_{offset}) \bmod 504$$

where $\lfloor \Box \rfloor$ refers to rounding down.

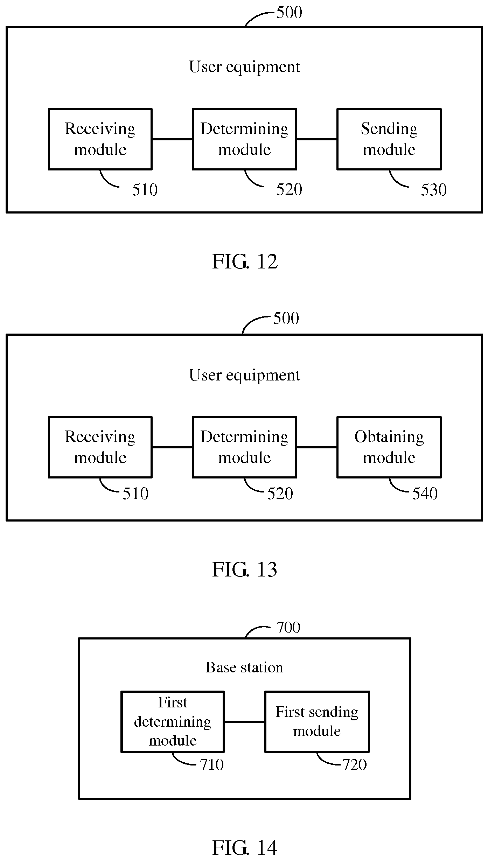

In an example, optionally, as shown in FIG. 12, the user equipment 500 further includes:
a sending module 530, configured to: according to the sequence group number determined by the determining module 520, send the sequence modulated signal that includes an uplink reference signal RS to the base station, where the uplink RS includes at least one of a demodulation reference signal DM RS and a sounding reference signal SRS.

Optionally, the DM RS is an uplink DM RS of a shared channel.

Optionally, as shown in FIG. 13, the user equipment 500 further includes:
an obtaining module 540, configured to: according to the indication signaling received by the receiving module 510, obtain at least one of information about an antenna port used by the user equipment for measuring downlink channel state information CSI, information about resources allocated by the base station to the user equipment, and information about an orthogonal code of the sequence modulated signal allocated by the base station to the user equipment.

The user equipment 500 according to the embodiments of the present invention may correspond to the user equipment in the information transmission method in the embodiments of the present invention, and the foregoing and other operations and/or functions of each module in the user equipment 500 are intended for implementing the corresponding procedure of each method in FIG. 1 to FIG. 8, which, for brevity, are not repeated here any further.

In the user equipment in the embodiment of the present invention, the sequence group number of the sequence group used by the user equipment for sending the sequence modulated signal is adjusted according to the sequence group offset value. Therefore, user equipments controlled by different transceiver nodes use different sequence groups, which can reduce the interference between the user equipments controlled by different transceiver nodes, and randomize the interference, thereby improving transmission efficiency, and reducing system signaling overhead.

FIG. 14 shows a schematic block diagram of a base station 700 according to an embodiment of the present invention. As shown in FIG. 14, the base station 700 includes:

a first determining module 710, configured to determine a sequence group offset value,
where the sequence group offset value is used to adjust a sequence group number of a sequence group used by a user equipment for sending a sequence modulated signal; and
a first sending module 720, configured to send indication signaling to the user equipment, where the indication signaling includes the sequence group offset value determined by the first determining module 710.

Therefore, in the base station in the embodiment of the present invention, the sequence group number of the sequence group used by the user equipment for sending the sequence modulated signal is adjusted according to the sequence group offset value. Therefore, user equipments controlled by different transceiver nodes use different sequence groups, which can reduce the interference between the user equipments controlled by different transceiver nodes, and randomize the interference, thereby improving transmission efficiency, and reducing system signaling overhead.

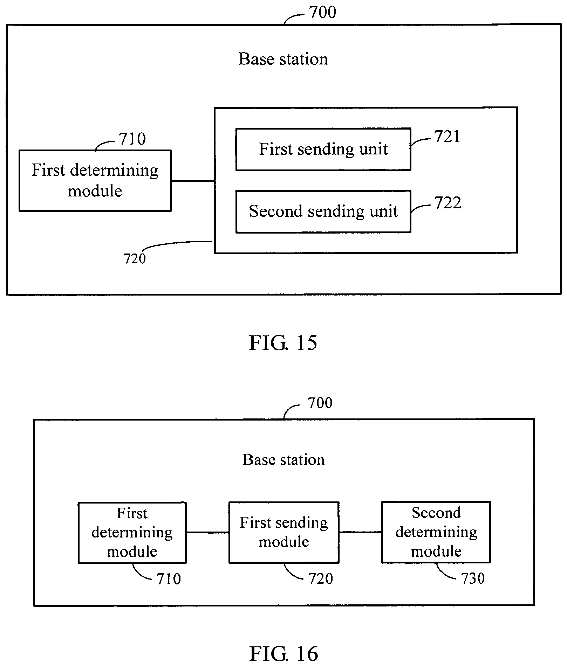

In the embodiment of the present invention, optionally, as shown in FIG. 15, the first sending module 720 includes a first sending unit 721, and the first sending unit 721 is configured to send the indication signaling to the user equipment in a unicast or multicast manner, where the indication signaling includes the sequence group offset value determined by the first determining module 710.

Optionally, as shown in FIG. 15, the first sending module 720 includes a second sending unit 722, and the second sending unit 722 is configured to send the indication signaling to a user equipment group that includes the user equipment, where user equipments included in the user equipment group are controlled by a same transceiver node, and the indication signaling includes the sequence group offset value determined by the first determining module 710.

Optionally, the indication signaling sent by the first sending module 720 is radio resource control RRC signaling or media access control MAC signaling.

In the embodiment of the present invention, optionally, as shown in FIG. 16, the base station 700 further includes:

a second determining module 730, configured to determine the sequence group number according to the sequence group offset value determined by the first determining module 710, where the sequence group offset value is a sequence group number offset value or a cell identifier offset value.

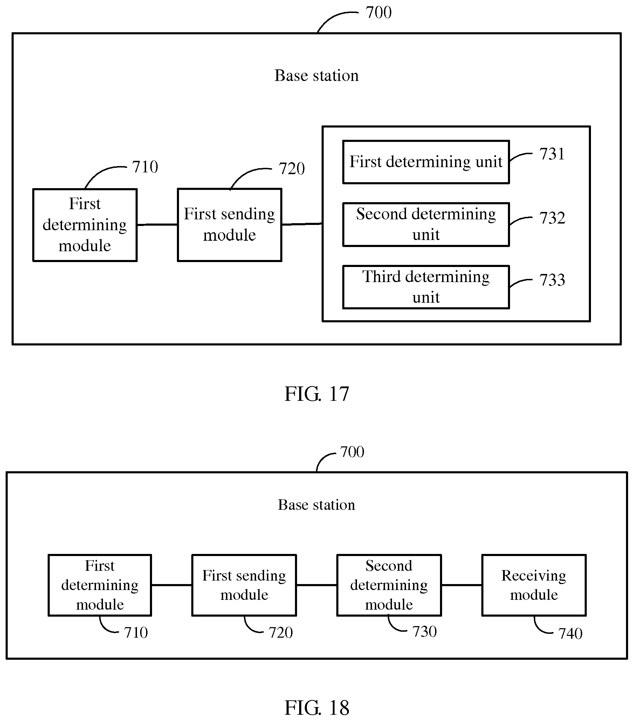

In an example, optionally, as shown in FIG. 17, the second determining module 730 includes a first determining unit 731, and the first determining unit 731 is configured to determine the sequence group number $u$ according to the sequence group number offset value $f_{offset}$ determined by the first determining module 710, where the sequence group number $u$ is determined according to the following equations:

$$u = \left( f_{\mathrm{gh}}(n_{\mathrm{s}}) + f_{\mathrm{ss}} + f_{offset} \right) \bmod 30$$

$$f_{\mathrm{ss}} = \left( f_{\mathrm{ss}}^{\mathrm{PUCCH}} + \Delta_{\mathrm{ss}} \right) \bmod 30 \qquad ;$$

or

$$f_{\mathrm{ss}}^{\mathrm{PUCCH}} = N_{\mathrm{ID}}^{\mathrm{cell}} \bmod 30$$

$$u = \left( f_{\mathrm{gh}}(n_{\mathrm{s}}) + f_{\mathrm{ss}} \right) \bmod 30$$

$$f_{\mathrm{ss}} = \left( f_{\mathrm{ss}}^{\mathrm{PUCCH}} + \Delta_{\mathrm{ss}} + f_{offset} \right) \bmod 30$$

$$f_{\mathrm{ss}}^{\mathrm{PUCCH}} = N_{\mathrm{ID}}^{\mathrm{cell}} \bmod 30$$

where $f_{\mathrm{gh}}(n_{\mathrm{s}})$ represents a hopping value of the sequence group in the $n_{\mathrm{sth}}$ timeslot, $\Delta_{\mathrm{ss}}$ represents a parameter configured by a cell, $\Delta_{\mathrm{ss}} \in \{0,1,...,29\}$, $N_{\mathrm{ID}}^{\mathrm{cell}}$ represents a cell identifier, and mod represents a modulo operation.

In an example, optionally, as shown in FIG. 17, the second determining module 730 includes a second determining unit 732, and the second determining unit 732 is configured to determine the sequence group number $u$ according to the cell identifier offset value $N_{offset}$ determined by the first determining module 710, where the sequence group number $u$ is determined according to the following equations:

$$u = \left( f_{\mathrm{gh}}(n_{\mathrm{s}}) + f_{\mathrm{ss}} \right) \bmod 30$$

$$f_{\mathrm{ss}} = \left( f_{\mathrm{ss}}^{\mathrm{PUCCH}} + \Delta_{\mathrm{ss}} \right) \bmod 30 \qquad ,$$

$$f_{\mathrm{ss}}^{\mathrm{PUCCH}} = N_{\mathrm{ID\_new}}^{\mathrm{cell}} \bmod 30$$

$$N_{\mathrm{ID\_new}}^{\mathrm{cell}} = (N_{\mathrm{ID}}^{\mathrm{cell}} + N_{offset}) \bmod 504$$

where $f_{gh}(n_s)$ represents a hopping value of the sequence group in the $n_{sth}$ timeslot, $\Delta_{ss}$ represents a parameter configured by a cell, $\Delta_{ss} \in \{0,1,...,29\}$, $N_{ID}^{cell}$ represents a cell identifier, and mod represents a modulo operation.

In an example, optionally, as shown in FIG. 17, the second determining module 730 includes a third determining unit 733, and the third determining unit 733 is configured to: according to the cell identifier offset value $N_{offset}$ determined by the first determining module 710, determine an initialized value $c_{init}$ of a random sequence used to generate the hopping value $f_{gh}(n_s)$, where the initialized value $c_{init}$ is determined according to the following equations:

$$c_{init} = \left\lfloor \frac{N_{ID\_new}^{cell}}{30} \right\rfloor ,$$

$$N_{ID\_new}^{cell} = (N_{ID}^{cell} + N_{offset})\,\mathrm{mod}\,504$$

where $\lfloor \Box \rfloor$ refers to rounding down.

In an example, optionally, as shown in FIG. 18, the base station 700 further includes:
a receiving module 740, configured to: according to the sequence group number determined by the second determining module 730, receive the sequence modulated signal that is sent by the user equipment and includes an uplink reference signal RS, where the uplink RS includes at least one of a demodulation reference signal DM RS and a sounding reference signal SRS.

Optionally, the DM RS is an uplink DM RS of a shared channel.

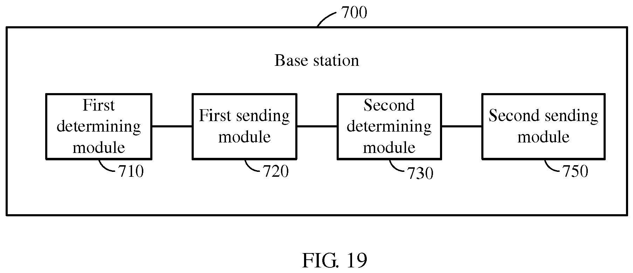

In an example, optionally, as shown in FIG. 19, the base station 700 further includes:
a second sending module 750, configured to: according to the indication signaling, send to the user equipment at least one of information about an antenna port used for measuring downlink channel state information CSI, information about resources allocated by the base station to the user equipment, and information about an orthogonal code of the sequence modulated signal allocated by the base station to the user equipment.

The base station 700 according to the embodiments of the present invention may correspond to the base station in the information transmission method in the embodiments of the present invention, and the foregoing and other operations and/or functions of each module in the base station 700 are intended for implementing the corresponding procedure of each method in FIG. 1 to FIG. 8, which, for brevity, are not repeated here any further.

In the base station in the embodiment of the present invention, the sequence group number of the sequence group used by the user equipment for sending the sequence modulated signal is adjusted according to the sequence group offset value. Therefore, user equipments controlled by different transceiver nodes use different sequence groups, which can reduce the interference between the user equipments controlled by different transceiver nodes, and randomize the interference, thereby improving transmission efficiency, and reducing system signaling overhead.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on the particular applications and design constraint conditions of the technical solution. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network units. Some or all of the units may be selected to achieve the objective of the solution of the embodiment of the present invention according to actual needs.

In addition, functional units in the embodiments of the present invention may be integrated into one processing unit, or each of the units may exist alone physically, or two or more units may be integrated into one unit. The integrated units may be implemented in a form of hardware, or may be implemented in a form of a software functional unit.

When the integrated units are implemented in a form of a software functional unit and sold or used as an independent product, the integrated units may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in the embodiments of the present invention. The foregoing storage medium includes: any mediums that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any equivalent modification or replacement readily figured out by a person skilled in the art within the technical scope of the present invention shall fall within the protection scope of the present invention. Therefore, the protection scope of the present invention shall be subject to the protection scope of the claims.

**Claims**

1. An information transmission method implemented in a communications system, in which a cell includes transceiver nodes in multiple geographic locations, comprising:

   receiving (S110), by a user equipment, indication signaling that is sent by a base station and comprises a sequence group offset value, wherein the sequence group offset value is used to adjust a sequence group number of a sequence group used by the user equipment for sending a sequence modulated signal, and wherein the user equipment is controlled by a transceiver node of the transceiver nodes included in the cell; and
   determining (S120) the sequence group number according to the sequence group offset value.

2. The method according to claim 1, wherein the receiving (S110) indication signaling that is sent by a base station and comprises a sequence group offset value comprises:
   receiving the indication signaling that is sent in a unicast or multicast manner by the base station.

3. The method according to claim 2, wherein the receiving the indication signaling that is sent in a unicast or multicast manner by the base station comprises:
   receiving the indication signaling that is sent by the base station to a user equipment group that comprises the user equipment, wherein user equipments comprised in the user equipment group are controlled by a same transceiver node.

4. An information transmission method implemented in a communications system, in which a cell includes transceiver nodes in multiple geographic locations, comprising:

   determining (S210) a sequence group offset value, wherein the sequence group offset value is used to adjust a sequence group number of a sequence group used by a user equipment for sending a sequence modulated signal, and wherein the user equipment is controlled by a transceiver node of the transceiver nodes included in the cell; and
   sending (S220) indication signaling to the user equipment, wherein the indication signaling comprises the sequence group offset value.

5. The method according to claim 4, wherein the sending (S220) indication signaling to the user equipment comprises:
   sending the indication signaling to the user equipment in a unicast or multicast manner.

**6.** The method according to claim 5, wherein the sending the indication signaling to the user equipment in a unicast or multicast manner comprises:
sending the indication signaling to a user equipment group that comprises the user equipment, wherein user equipments comprised in the user equipment group are controlled by a same transceiver node.

**7.** The method according to any one of claims 4 to 6 wherein the method further comprises:
determining (S230) the sequence group number according to the sequence group offset value.

**8.** A communications system, in which a cell includes transceiver nodes in multiple geographic locations, comprising a user equipment (500) and a base station (700), wherein the user equipment is controlled by a transceiver node of the transceiver nodes included in the cell, the user equipment (500) comprising:

a receiving module (510), configured to receive indication signaling that is sent by the base station and comprises a sequence group offset value, wherein the sequence group offset value is used to adjust a sequence group number of a sequence group used by the user equipment for sending a sequence modulated signal; and
a determining module (520), configured to determine the sequence group number according to the sequence group offset value comprised in the indication signaling received by the receiving module.

**9.** The communications system according to claim 8, wherein the receiving module (510) comprises a first receiving unit (511), and the first receiving unit (511) is configured to:
receive the indication signaling that is sent in a unicast or multicast manner by the base station.

**10.** The communications system according to claim 8 or 9, wherein the base station (700) comprises:

a first determining module (710), configured to determine a sequence group offset value, wherein the sequence group offset value is used to adjust a sequence group number of a sequence group used by a user equipment for sending a sequence modulated signal; and
a first sending module (720), configured to send indication signaling to the user equipment, wherein the indication signaling comprises the sequence group offset value determined by the first determining module,
wherein the user equipment is controlled by a transceiver node of at least two transceiver nodes included in a cell.

**11.** The communications system according to claim 10, wherein the first sending module (720) comprises a first sending unit (721), and the first sending unit (721) is configured to:
send the indication signaling to the user equipment in a unicast or multicast manner.

**12.** The communications system according to claim 11, wherein the first sending module (720) comprises a second sending unit (722), and the second sending unit (722) is configured to:
send the indication signaling to a user equipment group that comprises the user equipment, wherein user equipments comprised in the user equipment group are controlled by a same transceiver node.

**13.** The communications system according to any one of claims 10 to 12, wherein the base station further comprises:
a second determining module (730), configured to determine the sequence group number according to the sequence group offset value determined by the first determining module (710).

**Patentansprüche**

**1.** Informationsübertragungsverfahren, das in einem Kommunikationssystem implementiert ist, in dem eine Zelle Transceiverknoten an mehreren geografischen Positionen einschließt, das Folgendes umfasst:

Empfangen (S110), durch ein Benutzergerät, von Anzeigesignalisierung, die von einer Basisstation gesendet wird und einen Sequenzgruppenversatzwert enthält, wobei der Sequenzgruppenversatzwert verwendet wird, um eine Sequenzgruppennummer einer von dem Benutzergerät verwendeten Sequenzgruppe einzustellen, um ein sequenzmoduliertes Signal zu senden, und wobei das Benutzergerät durch einen Transceiverknoten der in der Zelle enthaltenen Transceiverknoten gesteuert wird; und
Bestimmen (S120) der Sequenzgruppennummer gemäß dem Sequenzgruppenversatzwert.

**2.** Verfahren gemäß Anspruch 1, wobei das Empfangen (S110) der Anzeigesignalisierung, die von einer Basisstation gesendet wird und einen Sequenzgruppenversatzwert enthält, Folgendes umfasst:
Empfangen der Anzeigesignalisierung, die in einer Unicast- oder Multicast-Weise von der Basisstation gesendet wird.

3. Verfahren gemäß Anspruch 2, wobei das Empfangen der Anzeigesignalisierung, die in einer Unicast- oder Multicast-Weise von der Basisstation gesendet wird, Folgendes umfasst:
Empfangen der Anzeigesignalisierung, die von der Basisstation zu einer Benutzergerätegruppe, die das Benutzergerät enthält, gesendet wird, wobei die in der Benutzergerätegruppe enthaltenen Benutzergeräte durch einen gleichen Transceiverknoten gesteuert werden.

4. Informationsübertragungsverfahren, das in einem Kommunikationssystem implementiert ist, in dem eine Zelle Transceiverknoten an mehreren geografischen Positionen einschließt, das Folgendes umfasst:

Bestimmen (S210) eines Sequenzgruppenversatzwertes, wobei der Sequenzgruppenversatzwert verwendet wird, um eine Sequenzgruppennummer einer von einem Benutzergerät verwendeten Sequenzgruppe einzustellen, um ein sequenzmoduliertes Signal zu senden, und wobei das Benutzergerät durch einen Transceiverknoten der in der Zelle enthaltenen Transceiverknoten gesteuert wird; und
Senden (S220) einer Anzeigesignalisierung zu dem Benutzergerät, wobei die Anzeigesignalisierung den Sequenzgruppenversatzwert enthält.

5. Verfahren gemäß Anspruch 4, wobei das Senden (S220) einer Anzeigesignalisierung zu dem Benutzergerät Folgendes umfasst:
Senden der Anzeigesignalisierung zu dem Benutzergerät in einer Unicast- oder Multicast-Weise,

6. Verfahren gemäß Anspruch 5, wobei das Senden der Anzeigesignalisierung zu dem Benutzergerät in einer Unicast- oder Multicast-Weise Folgendes umfasst:
Senden der Anzeigesignalisierung zu einer Benutzergerätegruppe, die das Benutzergerät, enthält, wobei die in der Benutzergerätegruppe enthaltenen Benutzergeräte durch einen gleichen Transceiverknoten gesteuert werden.

7. Verfahren gemäß einem der Ansprüche 4 bis 6, wobei das Verfahren ferner Folgendes umfasst:
Bestimmen (S230) der Sequenzgruppennummer gemäß dem Sequenzgruppenversatzwert.

8. Kommunikationssystem, in dem eine Zelle Transceiverknoten an mehreren geografischen Positionen enthält, das ein Benutzergerät (500) und eine Basisstation (700) umfasst, wobei das Benutzergerät durch einen Transceiverknoten der in der Zelle enthaltenen Transceiverknoten gesteuert wird und das Benutzergerät (500) Folgendes umfasst:

ein Empfangsmodul (510), das dazu ausgelegt ist, Anzeigesignalisierung, die von der Basisstation gesendet wird und einen Sequenzgruppenversatzwert umfasst, zu empfangen, wobei der Sequenzgruppenversatzwert verwendet wird, um eine Sequenzgruppennummer einer von dem Benutzergerät verwendeten Sequenzgruppe einzustellen, um ein sequenzmoduliertes Signal zu senden, und
ein Bestimmungsmodul (520), das dazu ausgelegt ist, die Sequenzgruppennummer gemäß dem Sequenzgruppenversatzwert zu bestimmen, der in der von dem Empfangsmodul empfangenen Anzeigesignalisierung enthalten ist.

9. Kommunikationssystem gemäß Anspruch 8, wobei das Empfangsmodul (510) eine erste Empfangseinheit (511) umfasst, und die erste Empfangseinheit (511) für Folgendes ausgelegt ist:
Empfangen der Anzeigesignalisierung, die in einer Unicast- oder Multicast-Weise von der Basisstation gesendet wird.

10. Kommunikationssystem gemäß Anspruch 8 oder 9, wobei die Basisstation (700) Folgendes umfasst:

ein erstes Bestimmungsmodul (710), das dazu ausgelegt ist, einen Sequenzgruppenversatzwert zu bestimmen, wobei der Sequenzgruppenversatzwert verwendet wird, um eine Sequenzgruppennummer einer von dem Benutzergerät verwendeten Sequenzgruppe einzustellen, um ein sequenzmoduliertes Signal zu senden; und
ein erstes Sendemodul (720), das dazu ausgelegt ist, Anzeigesignalisierung zu dem Benutzergerät zu senden, wobei die Anzeigesignalisierung den durch das erste Bestimmungsmodul bestimmten Sequenzgruppenversatzwert enthält,
wobei das Benutzergerät durch einen Transceiverknoten von mindestens zwei in einer Zelle enthaltenen Transceiverknoten gesteuert wird.

**11.** Kommunikationssystem gemäß Anspruch 10, wobei das erste Sendemodul (720) eine erste Sendeeinheit (721) umfasst, und die erste Sendeeinheit (721) für Folgendes ausgelegt ist:
Senden der Anzeigesignalisierung zu dem Benutzergerät in einer Unicast- oder Multicast-Weise.

**12.** Kommunikationssystem gemäß Anspruch 11, wobei das erste Sendemodul (720) eine zweite Sendeeinheit (722) umfasst, und die zweite Sendeeinheit (722) für Folgendes ausgelegt ist:
Senden der Anzeigesignalisierung zu einer Benutzergerätegruppe, die das Benutzergerät enthält, wobei die in der Benutzergerätegruppe enthaltenen Benutzergeräte durch einen gleichen Transceiverknoten gesteuert werden.

**13.** Kommunikationssystem gemäß einem der Ansprüche 10 bis 12, wobei die Basisstation ferner Folgendes umfasst:
ein zweites Bestimmungsmodul (730), das dazu ausgelegt ist, die Sequenzgruppennummer gemäß dem durch das erste Bestimmungsmodul (710) bestimmten Sequenzgruppenversatzwert zu bestimmen.

**Revendications**

**1.** Procédé de transmission d'informations mis en oeuvre dans un système de communication, dans lequel une cellule comprend des noeuds émetteurs-récepteurs dans de multiples emplacements géographiques, comprenant de :

recevoir (S110), par un équipement utilisateur, une signalisation d'indication qui est envoyée par une station de base et comprenant une valeur de décalage de groupe de séquences, dans lequel la valeur de décalage de groupe de séquences est utilisée pour ajuster un numéro de groupe de séquences d'un groupe de séquences utilisé par l'équipement utilisateur pour envoyer un signal modulé en séquence, et dans lequel l'équipement utilisateur est commandé par un noeud émetteur-récepteur des noeuds émetteurs-récepteurs inclus dans la cellule ; et
déterminer (S120) le numéro de groupe de séquences en fonction de la valeur de décalage de groupe de séquences.

**2.** Procédé selon la revendication 1, dans lequel la réception (S110) de la signalisation d'indication qui est envoyée par une station de base et comprend une valeur de décalage de groupe de séquences comprend de :
recevoir la signalisation d'indication qui est envoyée de manière unidiffusée ou multidiffusée par la station de base.

**3.** Procédé selon la revendication 2, dans lequel la réception de la signalisation d'indication qui est envoyée de manière unidiffusée ou multidiffusée par la station de base comprend de :
recevoir la signalisation d'indication envoyée par la station de base à un groupe d'équipements utilisateurs qui comprend l'équipement utilisateur, dans lequel des équipements utilisateurs compris dans le groupe d'équipements utilisateurs sont commandés par un même noeud émetteur-récepteur.

**4.** Procédé de transmission d'informations mis en oeuvre dans un système de communication, dans lequel une cellule comprend des noeuds émetteurs-récepteurs dans de multiples emplacements géographiques, comprenant de :

déterminer (S210) une valeur de décalage de groupe de séquences, dans lequel la valeur de décalage de groupe de séquences est utilisée pour ajuster un numéro de groupe de séquences d'un groupe de séquences utilisé par un équipement utilisateur pour envoyer un signal modulé en séquence, et dans lequel l'équipement utilisateur est commandé par un noeud émetteur-récepteur des noeuds émetteurs-récepteurs inclus dans la cellule ; et
envoyer (S220) une signalisation d'indication à l'équipement utilisateur, dans lequel la signalisation d'indication comprend la valeur de décalage de groupe de séquences.

**5.** Procédé selon la revendication 4, dans lequel l'envoi (S220) d'une signalisation d'indication à l'équipement utilisateur comprend de :
envoyer la signalisation d'indication à l'équipement utilisateur de manière unidiffusée ou multidiffusée.

**6.** Procédé selon la revendication 5, dans lequel l'envoi de la signalisation d'indication à l'équipement utilisateur de manière unidiffusée ou multidiffusée comprend de :
envoyer la signalisation d'indication à un groupe d'équipements utilisateurs qui comprend l'équipement utilisateur, dans lequel des équipements utilisateurs compris dans le groupe d'équipements utilisateurs sont commandés par un même noeud émetteur-récepteur.

**7.** Procédé selon l'une quelconque des revendications 4 à 6, dans lequel le procédé comprend en outre de : déterminer (S230) le numéro de groupe de séquences en fonction de la valeur de décalage de groupe de séquences.

**8.** Système de communication, dans lequel une cellule inclut des noeuds émetteurs-récepteurs dans de multiples emplacements géographiques, comprenant un équipement utilisateur (500) et une station de base (700), dans lequel l'équipement utilisateur est commandé par un noeud émetteur-récepteur des noeuds émetteurs-récepteurs inclus dans la cellule, l'équipement utilisateur (500) comprenant :

un module de réception (510), configuré pour recevoir une signalisation d'indication qui est envoyée par la station de base et comprenant une valeur de décalage de groupe de séquences, dans lequel la valeur de décalage de groupes de séquences est utilisée pour ajuster un numéro de groupe de séquences d'un groupe de séquences utilisé par l'équipement utilisateur pour envoyer un signal modulé en séquence; et
un module de détermination (520), configuré pour déterminer le numéro de groupe de séquences en fonction de la valeur de décalage de groupe de séquences comprise dans la signalisation d'indication reçue par le module de réception.

**9.** Système de communication selon la revendication 8, dans lequel le module de réception (510) comprend une première unité de réception (511) et la première unité de réception (511) est configurée pour :
recevoir la signalisation d'indication qui est envoyée de manière unidiffusée ou multidiffusée par la station de base.

**10.** Système de communication selon la revendication 8 ou 9, dans lequel la station de base (700) comprend :

un premier module de détermination (710), configuré pour déterminer une valeur de décalage de groupe de séquences, dans lequel la valeur de décalage de groupe de séquences est utilisée pour ajuster un numéro de groupe de séquences d'un groupe de séquences utilisé par un équipement utilisateur pour envoyer un signal modulé en séquence ; et
un premier module d'envoi (720), configuré pour envoyer une signalisation d'indication à l'équipement utilisateur, dans lequel la signalisation d'indication comprend la valeur de décalage de groupe de séquences déterminée par le premier module de détermination,
dans lequel l'équipement utilisateur est commandé par un noeud émetteur-récepteur d'au moins deux noeuds émetteurs-récepteurs inclus dans une cellule.

**11.** Système de communication selon la revendication 10, dans lequel le premier module d'envoi (720) comprend une première unité d'envoi (721), et la première unité d'envoi (721) est configurée pour :
envoyer la signalisation d'indication à l'équipement utilisateur de manière unidiffusée ou multidiffusée.

**12.** Système de communication selon la revendication 11, dans lequel le premier module d'envoi (720) comprend une seconde unité d'envoi (722), et la seconde unité d'envoi (722) est configurée pour :
envoyer la signalisation d'indication à un groupe d'équipements utilisateurs qui comprend l'équipement utilisateur, dans lequel des équipements utilisateurs compris dans le groupe d'équipements utilisateurs sont commandés par un même noeud émetteur-récepteur.

**13.** Système de communication selon l'une quelconque des revendications 10 à 12, dans lequel la station de base comprend en outre :
un second module de détermination (730), configuré pour déterminer le numéro de groupe de séquences en fonction de la valeur de décalage de groupe de séquences déterminée par le premier module de détermination (710).

FIG. 1A

FIG. 1B

Receive indication signaling that is sent by a base station and includes a sequence group offset value, where the sequence group offset value is used to adjust a sequence group number of a sequence group used by a user equipment for sending a sequence modulated signal

~ S110

Determine the sequence group number according to the sequence group offset value

~ S120

FIG. 2

Cell 6
Sequence group 6

Cell 1
Sequence group 1

Cell 5
Sequence group 5

Cell 0
Sequence group 0

Cell 2
Sequence group 2

Cell 4
Sequence group 4

Cell 3
Sequence group 3

FIG. 3A

Cell 6
Sequence group 12

Cell 1
Sequence group 7

Cell 5
Sequence group 11

Cell 0
Sequence group 6

Cell 2
Sequence group 8

Cell 4
Sequence group 10

Cell 3
Sequence group 9

FIG. 3B

Receive indication signaling that is sent by a base station and includes a sequence group offset value, where the sequence group offset value is used to adjust a sequence group number of a sequence group used by a user equipment for sending a sequence modulation signal ～ S110

Determine the sequence group number according to the sequence group offset value ～ S120

According to the sequence group number, send the sequence modulated signal that includes an uplink reference signal RS to the base station, where the uplink RS includes at least one of a demodulation reference signal DM RS and a sounding reference signal SRS ～ S130

FIG. 4

Receive indication signaling that is sent by a base station and includes a sequence group offset value, where the sequence group offset value is used to adjust a sequence group number of a sequence group used by a user equipment for sending a sequence modulated signal ～ S110

Determine the sequence group number according to the sequence group offset value ～ S120

According to the indication signaling, obtain at least one of information about an antenna port used by the user equipment for measuring downlink channel state information CSI, information about resources allocated by the base station to the user equipment, and information about an orthogonal code of the sequence modulated signal allocated by the base station to the user equipment ～ S140

FIG. 5

Determine a sequence group offset value, where the sequence group offset value is used to adjust a sequence group number of a sequence group used by a user equipment for sending a sequence modulated signal — S210

Send indication signaling to the user equipment, where the indication signaling includes the sequence group offset value — S220

FIG. 6

Determine a sequence group offset value, where the sequence group offset value is used to adjust a sequence group number of a sequence group used by a user equipment for sending a sequence modulated signal — S210

Send indication signaling to the user equipment, where the indication signaling includes the sequence group offset value — S220

Determine the sequence group number according to the sequence group offset value, where the sequence group offset value is a sequence group number offset value or a cell identifier offset value — S230

According to the sequence group number, receive the sequence modulated signal that is sent by the user equipment and includes an uplink reference signal RS, where the uplink RS includes at least one of a demodulation reference signal DM RS and a sounding reference signal SRS — S240

FIG. 7

Determine a sequence group offset value, where the sequence group offset value is used to adjust a sequence group number of a sequence group used by a user equipment for sending a sequence modulated signal ~ S210

Send indication signaling to the user equipment, where the indication signaling includes the sequence group offset value ~ S220

According to the indication signaling, send to the user equipment at least one of information about an antenna port used for measuring downlink channel state information CSI, information about resources allocated by the base station to the user equipment, and information about an orthogonal code of the sequence modulated signal allocated by the base station to the user equipment ~ S250

FIG. 8

500

User equipment

| Receiving module | Determining module |

510 520

FIG. 9

500

User equipment

511 — First receiving unit

512 — Second receiving unit

510

Determining module

520

FIG. 10

500

User equipment

510 — Receiving module

First determining unit — 521

Second determining unit — 522

Third determining unit — 523

FIG. 11

500

User equipment

| Receiving module | Determining module | Sending module |

510 520 530

FIG. 12

500

User equipment

| Receiving module | Determining module | Obtaining module |

510 520 540

FIG. 13

700

Base station

| First determining module | First sending module |

710 720

FIG. 14

700

Base station

710

First determining module

First sending unit 721

Second sending unit 722

720

FIG. 15

700

Base station

First determining module 710

First sending module 720

Second determining module 730

FIG. 16

700

Base station

710

First determining module

720

First sending module

First determining unit — 731

Second determining unit — 732

Third determining unit — 733

FIG. 17

700

Base station

First determining module — 710

First sending module — 720

Second determining module — 730

Receiving module — 740

FIG. 18

FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011015148 A1
- WO 2011098037 A1

- CN 102123502 A

**Non-patent literature cited in the description**

- **LEUMALEU DJIKEUSSI et al.** *LTE: Der Mobilfunk der Zukunft Reference Signals and Channel Estimation,* 25 November 2009